# NEUE EUROPÄISCHE PATENTSCHRIFT

(11) **EP 3 241 789 B2**
(45) Veröffentlichungstag und Bekanntmachung des Hinweises auf die Entscheidung über den Einspruch: **23.02.2022**
(45) Hinweis auf die Patenterteilung: 03.07.2019
(21) Anmeldenummer: 16168667.0
(22) Anmeldetag: 06.05.2016
(51) Int. Cl.: B65G 57/00, B65G 57/03

(54) **BELADESTATION FÜR EINE TRANSPORTVORRICHTUNG**
LOADING STATION FOR A TRANSPORT DEVICE
STATION DE CHARGE POUR UN DISPOSITIF DE TRANSPORT

(43) Veröffentlichungstag der Anmeldung: 08.11.2017
(73) Patentinhaber: Bizerba SE & Co. KG, 72336 Balingen (DE)
(72) Erfinder: Fausch, Hansjürg, 7015 Tamins (CH)
(74) Vertreter: Huber, Meik

(56) Entgegenhaltungen:
- EP-A1- 0 976 671
- DE-U1-202014 009 735
- NL-C2- 1 018 885
- US-A1- 2004 265 114

## Beschreibung

Die vorliegende Erfindung betrifft eine Beladestation für eine Transportvorrichtung, z. B. eine Rollbox und ein Verfahren zum Beladen einer Transportvorrichtung.

Im Bereich der Lebensmittellogistik ist ein verbreitetes Transportmittel eine Rollbox, in der kommissionierte Ware transportiert wird. Eine Rollbox besteht aus einer Grundplatte an der vier bewegliche Rollen befestigt sind. Die Rollbox enthält zwei Seitenwandgitter und optional ein Rückwandgitter. Optional ist mindestens eines der Gitter ist abklappbar. Derartige Transportvorrichtungen sind zum Beispiel aus der DE 100 02 202 A1 und der DE 100 02 210 A1 bekannt.

Die EP 0 976 671 A1 zeigt eine Beladevorrichtung nach dem Oberbegriff des Anspruchs 1, sowie eine Vorrichtung zum Beladen von Paletten mit einer Vielzahl von Paketen, wobei die Pakete über eine Zuführeinrichtung zugeführt werden, die an einem oberen Eingangsbereich eines vertikalen Produktschachtes endet. Die Pakete können so auf einer Palette abgelegt werden. Mit zunehmender Anzahl der auf der Palette abgelegten Pakete senkt sich die Palette im Produktschacht ab.

Aufgabe der Erfindung ist es, eine Vorrichtung zu schaffen, die das effiziente und zerstörungsfreie Beladen einer gattungsgemäßen Transportvorrichtung gewährleistet.

Diese Aufgabe wird durch eine Beladevorrichtung nach Anspruch 1 und ein Verfahren zum Beladen einer Transportvorrichtung nach Anspruch 7 gelöst.

Erfindungsgemäß wird eine Beladevorrichtung für eine Transportvorrichtung vorgeschlagen. Bei der Transportvorrichtung handelt es sich in einer Ausführungsform um eine Rollbox, wie sie zum Beispiel beim Transport von Lebensmitteln eingesetzt wird. Die Rollbox umfasst einen Bodenbereich, der als Bodenplatte oder als Gitter oder als parallel angeordnete Streben ausgebildet ist. Die Rollbox umfasst drei oder vier Räder. Die Räder befinden sich in den vier Ecken der Rollbox oder zwei Räder befinden sich in zwei nebeneinander liegenden Ecken der Rollbox und ein Rad in der Mitte der gegenüberliegenden Seite. Die Rollbox umfasst zwei oder drei Seitenteile, die die seitliche Begrenzung der Rollbox darstellen. Die Seitenteile bestehen aus einem Rahmen und Gittern oder einem Rahmen mit einem Geflecht aus Seilen oder Riemen.

Die erfindungsgemäße Beladevorrichtung umfasst eine Zuführvorrichtung zur Bereitstellung kommissionierter Produkte. Die kommissionierten Produkte werden in Schachteln bereitgestellt, die nacheinander über die Zuführvorrichtung bereitgestellt werden. Die Zuführvorrichtung führt eine Reihe von Produkte zu, die alle zusammen die Ladung für eine Rollbox darstellen. Die Produkte werden in der Beladevorrichtung teilweise nebeneinander angeordnet, sodass sie eine Ebene von Produkten bilden, die von ihrer Grundfläche her annähernd der Grundfläche der Rollbox entspricht. Mehrere dieser Produktebenen übereinander angeordnet bilden die Ladung für die Rollbox. Die Beladevorrichtung umfasst einen vertikalen Produktschacht. Der vertikale Produktschacht im Rahmen dieser Erfindung ist ein Bereich in der Beladevorrichtung, durch den die Produkte in vertikaler Richtung transportiert werden. Am unteren Ende des vertikalen Produktschachts befindet sich der Beladebereich der Beladevorrichtung. Das obere Ende des vertikalen Produktschachts bildet den Eingangsbereich, an dem die Produkte, die mit der Zuführvorrichtung angeliefert werden, in den Produktschacht eingeführt werden. Ein Bediener führt die Produkte am Ende der Zuführvorrichtung durch ziehen und schieben auf drehbar gelagerten Rollen weiter, bis sie am Eingangsbereich des vertikalen Produktschachts angekommen sind und in den vertikalen Produktschacht verbracht werden können. Der vertikale Produktschacht ist nicht durch vier abgeschlossene Wände gebildet. Der Produktschacht ist als teilweise offener Bereich zu verstehen, durch den Produkte mit Hilfe einer ersten Vertikaltransportvorrichtung und einer zweiten Vertikaltransportvorrichtung bewegbar sind. Die Beladevorrichtung umfasst eine erste Vertikaltransportvorrichtung zur Aufnahme mehrerer Produkte und zum vertikalen Bewegen mehrerer Produkte in dem vertikalen Produktschacht. Die Beladevorrichtung umfasst eine zweite Vertikaltransportvorrichtung zum vertikalen Bewegen mehrerer Produkte in dem vertikalen Produktschacht. Die zweite Vertikaltransportvorrichtung und die erste

Vertikaltransportvorrichtung sind derart angeordnet, dass Produkte in einem Übergabebereich im vertikalen Produktschacht von der ersten Vertikaltransportvorrichtung zur zweiten Vertikaltransportvorrichtung übergeben werden können. Die zweite Vertikaltransportvorrichtung setzt zumindest teilweise den Transportweg der ersten Vertikaltransportvorrichtung fort.

In einer Ausführungsform umfassen die erste Vertikaltransportvorrichtung und die zweite Vertikaltransportvorrichtung jeweils eine Gabel, die unabhängig voneinander in vertikaler Richtung verfahrbar gehaltert sind. Die beiden Gabeln greifen im Übergabereich derart ineinander, dass die Produkte von der ersten Vertikaltransportvorrichtung auf die zweite Vertikaltransportvorrichtung übergeben werden.

Erfindungsgemäß werden die Produkte von der Gabel der ersten Vertikaltransportvorrichtung auf die Gabel der zweiten Vertikaltransportvorrichtung übergeben, wenn ca. zweidrittel der Produkte, die in eine Rollbox verbracht werden, sich bereits auf der Gabel der ersten Vertikaltransportvorrichtung befinden. Das weitere Beladen mit Produkten im Eingangsbereich des vertikalen Schachtes ist während und nach der Übergabe der Produkte unterbrechungsfrei möglich.

Erfindungsgemäß ist die erste Vertikaltransportvorrichtung auf einer ersten Seite des vertikalen Produktschachts angeordnet und die zweite Vertikaltransportvorrichtung ist auf der gegenüberliegenden Seite des vertikalen Produktschachts angeordnet. Die erste Vertikaltransportvorrichtung ist im mittleren und oberen Bereich des Produktschachts verfahrbar. Die zweite Vertikaltransportvorrichtung ist im mittleren und unteren Bereich des Produktschachts verfahrbar. Die zu beladende Rollbox befindet sich in einem Beladebereich am unteren Ende des Produktschachts. Nachdem die Rollbox beladen ist, kann sie aus dem Beladebereich entnommen werden und zum Beispiel zur Sicherung mit Folie umwickelt werden. Des Weiteren kann die Rollbox etikettiert werden, so dass Sie Ihrem Empfänger zugeführt werden kann. In einer Ausführungsform befindet sich die Rollbox im Beladebereich der Beladevorrichtung auf einer Verschiebeeinrichtung, zum Beispiel Rollen oder einem Förderband oder Förderketten, die die Rollbox soweit anhebt, dass sie nicht mit den Rollen den Boden berührt und die Rollbox über die Verschiebeeinrichtung aus dem Beladebereich herausschiebbar ist. In einer Ausführungsform wird eine neue, leere Rollbox über eine Verschiebeeinrichtung in den Beladebereich der Beladevorrichtung eingebracht.

In einer Ausführungsform umfasst die Beladevorrichtung einen Schutz für die Rollbox, der über eine Bewegungsvorrichtung von oben in die Rollbox, die im Beladebereich steht, einbringbar ist. Beim Einbringen der Produkte von oben in die Rollbox werden zum Beispiel Seile oder Gitter, die teilweise den Seitenbereich der Rollbox bilden, durch den Schutz abgedeckt und so nicht durch herunterfahrende Kartons oder Gegenstände beschädigt.

In einer Ausführungsform umfasst die Beladevorrichtung mindestens eine Lichtschranke im Eingangsbereich des vertikalen Produktschachts. Das Signal der Lichtschranke dient der Steuerung der Bewegung der ersten Vertikaltransportvorrichtung und der zweiten Vertikaltransportvorrichtung. Nachdem eine Produktebene in den vertikalen Produktschacht eingebracht ist, werden die erste Vertikaltransportvorrichtung oder die zweite Vertikaltransportvorrichtung durch die Steuerung der Beladevorrichtung soweit abgesenkt, dass der Eingangsbereich des vertikalen Produktschachts für die nächste Produktebene frei ist. Das Signal der Lichtschranke meldet diesen Zustand, in dem der Eingangsbereich des vertikalen Produktschachtes frei ist, so dass die Abwärtsbewegung der ersten Vertikaltransportvorrichtung oder der zweiten Vertikaltransportvorrichtung gestoppt wird, bis eine weitere Produktebene im Eingangsbereich des vertikalen Produktschachtes verbracht wurde.

Erfindungsgemäß ist die Gabel der ersten Vertikaltransportvorrichtung nach unten abklappbar. In einer Ausführungsform ist die Gabel der ersten Vertikaltransportvorrichtung zur Seite wegfahrbar. Diese Bewegungen finden im Übergabebereich des vertikalen Produktschachtes statt, nachdem die Produkte von der Gabel der ersten Vertikaltransportvorrichtung auf die Gabel der zweiten Vertikaltransportvorrichtung übergeben wurden. In einer Ausführungsform ist die Gabel der zweiten Vertikaltransportvorrichtung zur Seite wegfahrbar. Diese Bewegung findet im Beladebereich des vertikalen Produktschachtes statt, nachdem die Produkte bis in die Rollbox abgesenkt wurden. So wird die Gabel der zweiten Vertikaltransportvorrichtung unter den Produkten hervorgezogen um die Produkte auf die Bodenplatte der Rollbox abzusenken.

In einer Ausführungsform umfasst die Beladevorrichtung eine Steuereinheit, die mindestens die Bewegung der ersten Vertikaltransportvorrichtung und der zweiten Vertikaltransportvorrichtung steuert. In einer Ausführungsform steuert die Steuereinheit auch das Zuführen von Produkten, die Bewegung des Rollboxschutzes und das Einführen und Ausführen von Rollboxen. In einer Ausführungsform steuert die Steuereinheit eine Wickeleinheit, die eine beladene Rollbox mit Plastikfolie zumindest teilweise umwickelt. In einer Ausführungsform steuert die Steuereinheit eine Druckeinheit und eine Etikettiereinheit, die ein Etikett auf die beladene Rollbox aufbringt.

In einer Ausführungsform umfasst die zweite Vertikaltransportvorrichtung eine Wiegevorrichtung, die das Gesamtgewicht aller sich auf der zweiten Vertikaltransportvorrichtung befindlichen Produkte bestimmt.

In einer Ausführungsform wird ein Verfahren zum Beladen einer Transportvorrichtung mittels einer solchen Beladevorrichtung, zum Beispiel einer Rollbox vorgeschlagen. Das Verfahren umfasst das Zuführen einer Vielzahl von Produkten mittels einer Zuführvorrichtung und die Aufnahme von Produkten auf einer ersten Vertikaltransportvorrichtung. Weiter umfasst das Verfahren das Übergeben der Produkte von der ersten Vertikaltransportvorrichtung auf eine zweite Vertikaltransportvorrichtung. Diese Übergabe findet in einem Übergabebereich eines vertikalen Produktschachts statt. Das Verfahren umfasst weiter die Aufnahme weiterer Produkte auf der zweiten Vertikaltransportvorrichtung und das Übergeben der Produkte in die Rollbox. Diese Übergabe findet in einem Beladebereich des vertikalen Produktschachts statt. Das Verfahren umfasst weiter das Bereitstellen der ersten Vertikaltransportvorrichtung zur weiteren Aufnahme von Produkten.

In einer Ausführungsform umfasst der Schritt der Aufnahme von Produkten auf der ersten Vertikaltransportvorrichtung das Empfangen eines Signals, das bedeutet dass eine Produktebene vollständig beladen ist. In einer Ausführungsform wird dieses Signal durch den Bediener ausgelöst. In einer Ausführungsform wird dieses Signal durch ein optisches System ausgelöst, das zum Beispiel erkennt wenn eine Produktebene vollständig beladen ist. In einer Ausführungsform wird dieses Signal durch die Zuführeinrichtung ausgelöst, die zählt wieviel Produkte bereits zugeführt wurden und daraus rückschließt, dass die Produktebene vollständig beladen ist. Das Verfahren umfasst weiter das vertikale Bewegen der ersten Vertikaltransportvorrichtung zur Aufnahme einer weiteren Produktebene. In einer Ausführungsform wird die vertikale Bewegung über eine Lichtschranke gesteuert, die erkennt wenn die letzte Produktebene weit genug in den vertikalen Produktschacht verbracht ist, so dass die nächste Produktebene in den Schacht eingebracht werden kann. In einer Ausführungsform umfasst das Verfahren den Schritt des Überwachens des Beladens einer weiteren Produktebene. In einer Ausführungsform umfasst der Schritt des Aufnehmens weiterer Produkte auf der zweiten Vertikaltransportvorrichtung das Empfangen eines Signals, das bedeutet dass eine Produktebene vollständig beladen ist. In einer Ausführungsform wird dieses Signal durch den Bediener ausgelöst. In einer Ausführungsform wird dieses Signal durch ein optisches System ausgelöst, das zum Beispiel erkennt wenn eine Produktebene vollständig beladen ist. In einer Ausführungsform wird dieses Signal durch die Zuführeinrichtung ausgelöst, die zählt wieviel Produkte bereits zugeführt wurden und daraus rückschließt, dass die Produktebene vollständig beladen ist. Das Verfahren umfasst weiter das vertikale Bewegen der zweiten Vertikaltransportvorrichtung zur Aufnahme einer weiteren Produktebene. In einer Ausführungsform wird die vertikale Bewegung über eine Lichtschranke gesteuert, die erkennt wenn die letzte Produktebene weit genug in den vertikalen Produktschacht verbracht ist, so dass die nächste Produktebene in den Schacht eingebracht werden kann. In einer Ausführungsform umfasst das Verfahren den Schritt des Überwachens des Beladens einer weiteren Produktebene.

Erfindungsgemäß umfasst der Schritt des Übergebens der Produkte von der ersten Vertikaltransportvorrichtung auf die zweite Vertikaltransportvorrichtung das Bewegen der ersten Vertikaltransportvorrichtung nach unten bis die Gabel der ersten Vertikaltransportvorrichtung die Gabel der zweiten Vertikaltransportvorrichtung kreuzt. Die Zinken der Gabeln der ersten Vertikaltransportvorrichtung und der zweiten Vertikaltransportvorrichtung sind geometrisch so versetzt, dass sie ineinander greifen können und die beiden Gabeln sich in vertikaler Richtung berührungsfrei passieren können. Der Schritt umfasst weiter das Abkippen der Gabel nach unten um einen Drehpunkt an dem die Gabel an der ersten Vertikaltransportvorrichtung gehaltert ist oder das Herausziehen der Gabel der ersten Vertikaltransportvorrichtung aus dem vertikalen Produktschacht. Wenn die Gabel der ersten Vertikaltransportvorrichtung soweit heruntergefahren wurde, dass die Produkte auf der Gabel der zweiten Vertikaltransportvorrichtung aufstehen, so ist die Gabel der ersten Vertikaltransportvorrichtung frei und kann aus dem vertikalen Produktschacht entfernt werden. Das geschieht durch Abkippen der Gabel oder Herausziehen der Gabel aus dem Produktschacht. Die zweite Vertikaltransportvorrichtung wird dann nach unten bewegt. Diese Bewegung ist durch Stopps unterbrochen, die notwendig sind, um weitere Produktebenen im Eingangsbereich des vertikalen Produktschachtes einzubringen. Die erste Vertikaltransportvorrichtung wird nach oben verfahren und bereitgestellt, wenn der Beladungsprozess für eine nachfolgende Rollbox gestartet wird.

In einer Ausführungsform wird ein Rollboxschutz in die Rollbox eingeführt bevor die Produkte durch die zweite Vertikaltransportvorrichtung in die Rollbox verbracht werden.

In einer Ausführungsform umfasst das Verfahren zum Beladen einer Transportvorrichtung die Schritte des Entfernens des Rollboxschutzes, des Ausführens der befüllten Transportvorrichtung über eine Ausführvorrichtung aus dem vertikalen Produktschacht und des Bereitstellens einer neuen Transportvorrichtung im vertikalen Produktschacht.

Einige Ausführungsformen der Erfindung sind in den Zeichnungen beispielhaft gezeigt und nachfolgend beschrieben. Es zeigen, jeweils in schematischer Darstellung:
- Abbildung 1: eine erfindungsgemäße Beladevorrichtung in einem ersten Betriebszustand,
- Abbildung 2: eine erfindungsgemäße Beladevorrichtung in einem zweiten Betriebszustand,
- Abbildung 3: eine erfindungsgemäße Beladevorrichtung in einem dritten Betriebszustand,
- Abbildung 4: eine erfindungsgemäße Beladevorrichtung in einem vierten Betriebszustand,
- Abbildung 5: eine erfindungsgemäße Beladevorrichtung in einem fünften Betriebszustand,
- Abbildung 6: eine erfindungsgemäße Beladevorrichtung in einem sechsten Betriebszustand.

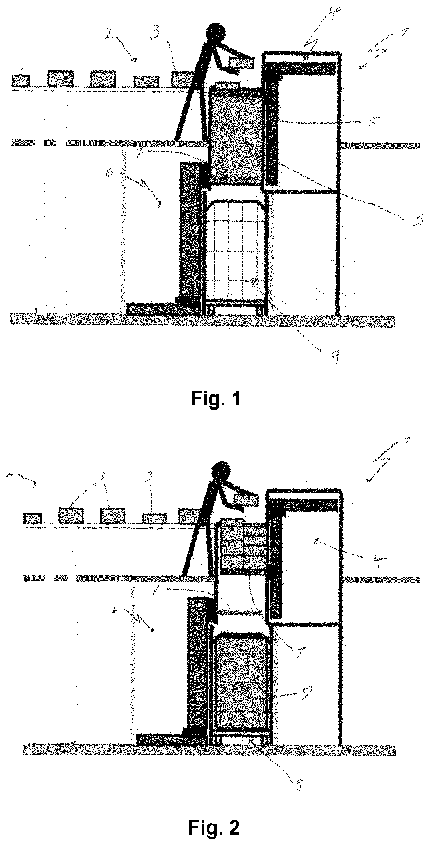

Abbildung 1 zeigt eine erfindungsgemäße Beladevorrichtung 1. Die Beladevorrichtung 1 umfasst ein Zuführband 2, auf welchem Produkte 3, die kommissioniert sind, zugeführt werden. Produkte 3 die zu einer Lieferung gehören werden zum Transport in eine Rollbox 9 verbracht. Produkte 3 die zusammen in eine Rollbox 9 gehören, werden in entsprechender Reihenfolge aufeinanderfolgend über das Zuführband 2 zugeführt. Die Beladevorrichtung 1 umfasst einen vertikalen Produktschacht. Das Zuführband 2 endet am oberen Ende des vertikalen Produktschachts an dessen Eingangsbereich. Das Zuführband 2 ist über drehbare Rollen mit dem Eingangsbereich des vertikalen Produktschachts verbunden, so dass die Produkte 3 über die drehbaren Rollen zum Eingangsbereich des vertikalen Produktschachts bewegt werden können. Die Rollbox 9 befindet sich am unteren Ende des vertikalen Produktschachts in einem Beladebereich. Die Beladevorrichtung 1 umfasst eine erste Vertikaltransportvorrichtung 4 mit einer ersten Gabel 5, die durch die erste Vertikaltransportvorrichtung 4 in einem oberen und mittleren Bereich des vertikalen Produktschachts auf und ab bewegt wird. Die Beladevorrichtung 1 umfasst eine zweite Vertikaltransportvorrichtung 6 mit einer zweiten Gabel 7, die durch die zweite Vertikaltransportvorrichtung 6 in einem unteren und mittleren Bereich des vertikalen Produktschachts auf und ab bewegt wird. Die erste Vertikaltransportvorrichtung 4 und die zweite Vertikaltransportvorrichtung 6 sind an gegenüberliegenden Seiten des vertikalen Produktschachts angeordnet. Die erste Gabel 5 und die zweite Gabel 7 greifen von den entsprechenden Seiten in den vertikalen Produktschacht ein. Die Seitenbegrenzung des vertikalen Produktschachtes ist derart ausgestaltet, dass sich die erste Gabel 5 und die zweite Gabel 7 im vertikalen Produktschacht in ihren Bereichen auf und ab bewegen können. Die Zinken der ersten Gabel 5 und die Zinken der zweiten Gabel 7 sind derart ausgestaltet, dass sich die Gabeln 5, 7 im vertikalen Produktschacht kreuzen können. Das heißt, die Zinken der ersten Gabel 5 und die Zinken der zweiten Gabel 7 sind horizontal versetzt, so dass sie ineinander greifen können. Die Beladevorrichtung enthält des Weiteren einen Rollboxschutz 8, der von oben in eine Rollbox 9 eingeführt wird, um die Seitenwände der Rollbox 9 beim Beladen vor Beschädigung zu schützen. Der Rollboxschutz 8 befindet sich in Abbildung 1 in der Ausgangsposition. Eine leere Rollbox 9 befindet sich im Beladebereich. Die erste Gabel 5 der ersten Vertikaltransportvorrichtung 4 befindet sich im Eingangsbereich des vertikalen Schachts und kann mit der ersten Produktebene beladen werden. Werden Produkte nach und nach auf die erste Gabel 5 geladen und ist eine Produktebene voll, so wird die erste Gabel 5 durch die erste Vertikaltransportvorrichtung 4 nach unten bewegt, um die nächste Produktebene aufzunehmen. Die zweite Gabel 7 der zweiten Vertikaltransportvorrichtung 6 befindet sich in ihrer oberen Position. In Abbildung 2 ist gezeigt, dass zwischenzeitlich der Rollboxschutz 8 in die Rollbox 9 gefahren wurde. Der Benutzer lädt gerade die vierte Produktebene auf die erste Gabel 5 der ersten Vertikaltransportvorrichtung 4. Die erste Gabel 5 der ersten Vertikaltransportvorrichtung 4 ist soweit herunterbewegt, dass der Benutzer die Produkte 3 direkt vom Zuführband 2 in den Eingangsbereich des vertikalen Schachts verbringen kann.

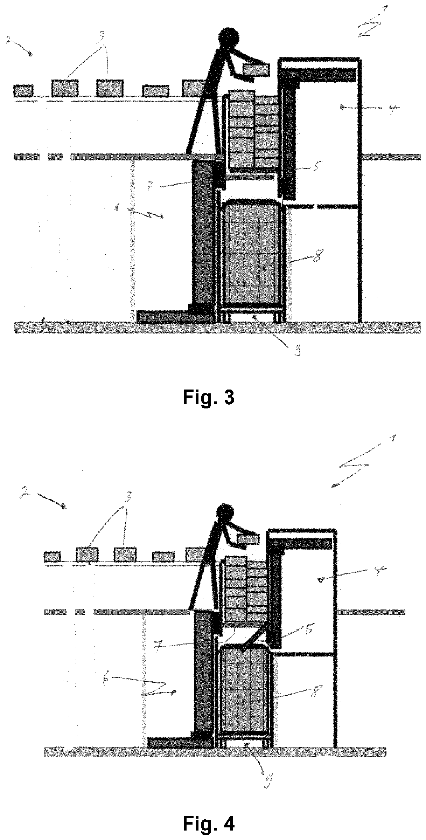

Abbildung 3 zeigt die Beladevorrichtung 1, nachdem schon mehrere Produkte 3 auf die erste Gabel 5 der ersten Vertikaltransportvorrichtung 4 gestapelt wurden. Die erste Gabel 5 hat sich der obersten Position der zweiten Gabel 7 der zweiten Vertikaltransportvorrichtung 6 angenähert. Der Benutzer verbringt die Produkte 3 weiter, Produktebene für Produktebene, in den Eingangsbereich des vertikalen Produktschachts.

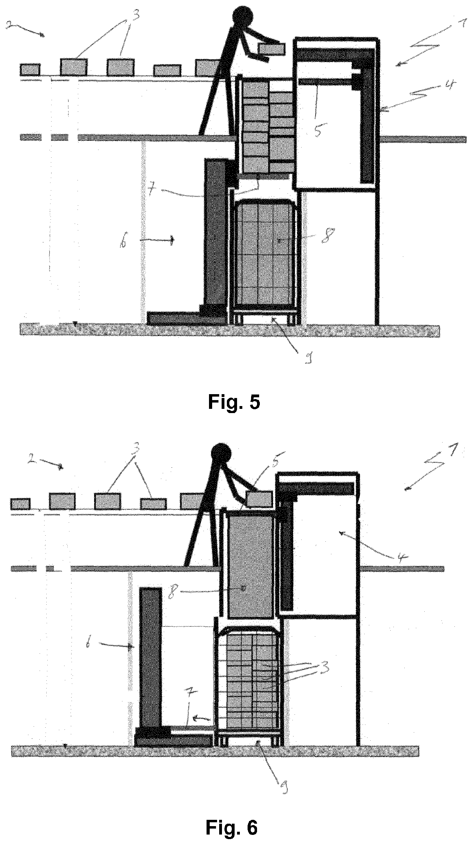

Abbildung 4 zeigt wie sich die erste Gabel 5 der ersten Vertikaltransportvorrichtung 4 und die zweite Gabel 7 der zweiten Vertikaltransportvorrichtung 6 im Übergabebereich des vertikalen Produktschachts auf gleicher Höhe befinden. Die erste Gabel 5 fährt auf ihrem Weg nach unten und kreuzt die Position der zweiten Gabel 7. Wenn die erste Gabel 5 und die zweite Gabel 7 auf gleicher Höhe sind, übergibt die erste Gabel 5 die Produkte 3, die sich im vertikalen Produktschacht befinden an die zweite Gabel 7. Die ersten Gabel 5 kippt an ihrem Befestigungspunkt nach unten weg, sodass der Weg für die zweite Gabel 7 frei ist, um von der zweiten Vertikaltransportvorrichtung 6 weiter nach unten bewegt zu werden. Ist die erste Gabel 5 um 90° gekippt, so bewegt sich die erste Vertikaltransportvorrichtung 4 nach oben in ihre Ausgangsposition. Die Übergabe der Produkte ist abgeschlossen. Die erste Vertikaltransportvorrichtung 4 wird in ihrer oberen Position zurückgefahren, die erste Gabel 5 horizontal ausgerichtet und ist somit bereit, wieder in den vertikalen Produktschacht verbracht zu werden. Dies ist in Abbildung 5 gezeigt. Die zweite Gabel 7 der zweiten Vertikaltransportvorrichtung 6 hält nun die Produkte 3 im vertikalen Produktschacht. Ist eine Produktebene komplettiert, so verfährt die zweite Vertikaltransportvorrichtung 6 nach unten, um die nächste Produktebene aufzunehmen. Sind alle Produkte 3, die für eine Rollbox 9 vorgesehen sind, in den vertikalen Produktschacht verbracht, so fährt die zweite Vertikaltransportvorrichtung 6 nach unten bis die Beladeposition erreicht ist. Die zweite Vertikaltransportvorrichtung 6 zieht die zweite Gabel 7 unter den Produkten 3 hervor, sodass die Produkte 3 in die Rollbox 9 übergeben werden. Der Rollboxschutz 8 wird nach oben aus der Rollbox 9 gezogen. Die erste Gabel 5 wird von der ersten Vertikaltransportvorrichtung 4 wieder in den vertikalen Produktschacht verbracht und befindet sich in der Ausgangsposition, um mit der ersten Ebene von Produkten 3, die für die nächste Rollbox 9 vorgesehen sind, beladen zu werden. Die beladene Rollbox 9 wird aus dem Beladebereich ausgeführt und eine leere Rollbox 9 wird in den Beladebereich eingeführt. Die beladene Rollbox 9 wird in einer Verpackungsstation mit Folie umwickelt und etikettiert.

## Patentansprüche

1. Beladevorrichtung für eine Transportvorrichtung (9), umfassend:
eine Zuführvorrichtung (2) zur Bereitstellung kommissionierter Produkte (3),
einen vertikalen Produktschacht, an dessen Eingangsbereich am oberen Ende des Produktschachtes die Zuführvorrichtung die Produkte bereitstellt,
eine erste Vertikaltransportvorrichtung (4), die eine in vertikaler Richtung verfahrbare Gabel (5) umfasst und zur Aufnahme mehrerer Produkte (3) und zum vertikalen Bewegen mehrerer Produkte (3) in dem vertikalen Produktschacht ausgebildet ist, und
eine zweite Vertikaltransportvorrichtung (6) zum vertikalen Bewegen mehrerer Produkte (3) in dem vertikalen Produktschacht
**dadurch gekennzeichnet,**
**dass** die zweite Vertikaltransportvorrichtung (6) eine in vertikaler Richtung verfahrbare Gabel (7) umfasst, die in einem Übergabebereich mit der Gabel (5) der ersten Vertikaltransportvorrichtung (4) ineinander greift, und
wobei die zweite Vertikaltransportvorrichtung (6) und die erste Vertikaltransportvorrichtung (4) derart angeordnet sind, dass Produkte (3) in dem Übergabebereich im vertikalen Produktschacht von der Gabel (5) der ersten Vertikaltransportvorrichtung (4) auf die Gabel (7) der zweiten Vertikaltransportvorrichtung (6) übergeben werden können und dass die zweite Vertikaltransportvorrichtung (6) den Transportweg der ersten
Vertikaltransportvorrichtung (4) zumindest teilweise fortsetzt, und wobei
die Gabel (5) der ersten Vertikaltransportvorrichtung (4) nach unten abklappbar oder nach unten abklappbar und zur Seite wegfahrbar ist und dass die Gabel (7) der zweiten Vertikaltransportvorrichtung (6) zur Seite wegfahrbar ist, und dass
die erste Vertikaltransportvorrichtung (4) auf einer ersten Seite des vertikalen Produktschachts angeordnet ist und die zweite Vertikaltransportvorrichtung (6) auf der gegenüberliegenden Seite des vertikalen Produktschachts angeordnet ist, und dass
die erste Vertikaltransportvorrichtung (4) im mittleren und oberen Bereich des Produktschachts verfahrbar ist und
die zweite Vertikaltransportvorrichtung (6) im mittleren und unteren Bereich des Produktschachts verfahrbar ist,
und **dass**
die zu beladende Transportvorrichtung (9) in einem Beladebereich am unteren Ende des Produktschachts in die Beladevorrichtung einbringbar ist.

2. Beladevorrichtung nach Anspruch 1, **dadurch gekennzeichnet, dass** die Beladevorrichtung (1) zum Beladen einer Rollbox (9) bestehend aus einem rechteckigen Bodenbereich, an dem drei oder vier Laufrollen befestigt sind und mindestens zwei Seitenelementen, ausgebildet ist.

3. Beladevorrichtung nach einem der Ansprüche 1 bis 2, **dadurch gekennzeichnet, dass** die Beladevorrichtung (1) einen Schutz (8) für die Transportvorrichtung (9) umfasst, der über eine Bewegungsvorrichtung von oben in eine Transportvorrichtung (9), die im Beladebereich steht, einbringbar ist.

4. Beladevorrichtung nach einem der Ansprüche 1 bis 3, **dadurch gekennzeichnet, dass** die Beladevorrichtung (1) mindestens eine Lichtschranke im Eingangsbereich des vertikalen Produktschachts umfasst.

5. Beladevorrichtung nach einem der Ansprüche 1 bis 4, **dadurch gekennzeichnet, dass** die Beladevorrichtung (1) eine Steuereinheit umfasst, die mindestens die Bewegung der ersten Vertikaltransportvorrichtung (4) und der zweiten Vertikaltransportvorrichtung (6) steuert.

6. Beladevorrichtung nach einem der Ansprüche 1 bis 5, **dadurch gekennzeichnet, dass** die zweite Vertikaltransportvorrichtung (6) mit einer Wiegevorrichtung ausgestattet ist, die das Gesamtgewicht aller sich auf der zweiten Vertikaltransportvorrichtung (6) befindlichen Produkte (3) bestimmt.

7. Verfahren zum Beladen einer Transportvorrichtung mittels einer Beladevorrichtung nach einem der Ansprüche 1 bis 6, wobei das Verfahren folgende Schritte umfasst:
- Zuführen einer Vielzahl von Produkten (3) mittels einer Zuführvorrichtung (2),
- Aufnahme von Produkten (3) auf einer ersten Vertikaltransportvorrichtung (4),
**dadurch gekennzeichnet,**
**dass** das Verfahren folgende Schritte umfasst:
- Übergeben der Produkte (3) von der ersten Vertikaltransportvorrichtung (4) auf eine zweite Vertikaltransportvorrichtung (6) durch Bewegen der ersten Vertikaltransportvorrichtung (4) nach unten bis eine Gabel (5) der ersten Vertikaltransportvorrichtung (4) eine Gabel (7) der zweiten Vertikaltransportvorrichtung (6) kreuzt,
- Aufnahme weiterer Produkte (3) auf der zweiten Vertikaltransportvorrichtung (6),
- Übergeben der Produkte (3) in die Transportvorrichtung und bereitstellen der ersten Vertikaltransportvorrichtung (4) zur weiteren Aufnahme von Produkten (3).

8. Verfahren nach Anspruch 7, **dadurch gekennzeichnet dass** die Transportvorrichtung (9) eine Rollbox ist.

9. Verfahren nach Anspruch 7 oder 8, **dadurch gekennzeichnet dass** der Schritt des Aufnehmens von Produkten auf der ersten Vertikaltransportvorrichtung folgende Schritte umfasst:
- empfangen eines Signals dass eine Produktebene vollständig beladen ist,
- vertikales Bewegen der ersten Vertikaltransportvorrichtung (4) zur Aufnahme einer weiteren Produktebene, und
- überwachen des Beladens einer weiteren Produktebene, und dass der Schritt des Aufnehmens weiterer Produkte auf der zweiten Vertikaltransportvorrichtung (6) folgende Schritte umfasst:
- empfangen eines Signals dass eine Produktebene vollständig beladen ist,
- vertikales Bewegen der zweiten Vertikaltransportvorrichtung (6) zur Aufnahme einer weiteren Produktebene, und
- überwachen des Beladens einer weiteren Produktebene.

10. Verfahren nach einem der Ansprüche 7 bis 9, **dadurch gekennzeichnet dass** der Schritt des Übergebens der Produkte von der ersten Vertikaltransportvorrichtung auf die zweite Vertikaltransportvorrichtung folgende weitere Schritte umfasst:
- abklappen der Gabel (5) der ersten Vertikaltransportvorrichtung (4), und
- Bewegen der zweiten Vertikaltransportvorrichtung (6) nach unten und Bewegen der ersten Vertikaltransportvorrichtung (4) nach oben.

11. Verfahren nach einem der Ansprüche 8 bis 10, **dadurch gekennzeichnet dass** das Verfahren folgende Schritte umfasst:
- Einführen eines Rollboxschutzes (8) in die Rollbox (9).

12. Verfahren nach Anspruch 11, **dadurch gekennzeichnet dass** das Verfahren folgende Schritte umfasst:
- Entfernen des Rollboxschutzes (8),
- Ausführen der befüllten Transportvorrichtung (9) über eine Ausführvorrichtung aus dem vertikalen Produktschacht, und
- Bereitstellen einer neuen Transportvorrichtung (9) im vertikalen Produktschacht.

## Claims

1. Loading apparatus for a transport apparatus (9), comprising:
a feeding apparatus (2) for supplying order-picked products (3),
a vertical product shaft, the feeding apparatus supplying the products at the entry region of the same,
at the upper end of the product shaft,
a first vertical-transport apparatus (4), which comprises a vertically displaceable fork (5) and is designed to pick up a plurality of products (3) and to move a plurality of products (3) vertically in the vertical product shaft, and
a second vertical-transport apparatus (6) for moving a plurality of products (3) vertically in the vertical product shaft,
**characterized**
**in that** the second vertical-transport apparatus (6) comprises a vertically displaceable fork (7), which, in a transfer region, engages with the fork (5) of the first vertical-transport apparatus (4), and wherein the second vertical-transport apparatus (6) and the first vertical-transport apparatus (4) are arranged such that products (3) can be transferred from the fork (5) of the first vertical-transport apparatus (4) onto the fork (7) of the second vertical-transport apparatus (6) in the transfer region in the vertical product shaft,
and **in that** the second vertical-transport apparatus (6) continues the transport path of the first vertical-transport apparatus (4) at least to some extent, and
wherein
the fork (5) of the first vertical-transport apparatus (4) can be swung downwards or can be swung downwards and moved away to the side, and in that the fork (7) of the second vertical-transport apparatus (6) can be moved away to the side, and in that
the first vertical-transport apparatus (4) is arranged on a first side of the vertical product shaft and the second vertical-transport apparatus (6) is arranged on the opposite side of the vertical product shaft, and in that
the first vertical-transport apparatus (4) can be displaced in the central and upper regions of the product shaft and the second vertical-transport apparatus (6) can be displaced in the central and lower regions of the product shaft, and in that the transport apparatus (9) which is to be loaded can be introduced into the loading apparatus in a loading region at the lower end of the product shaft.

2. Loading apparatus according to Claim 1, **characterized in that** the loading apparatus (1) is designed to load a rollbox trolley (9) comprising a rectangular base region, on which are fastened three or four rollers and at least two side elements.

3. Loading apparatus according to either of Claims 1 and 2, **characterized in that** the loading apparatus (1) comprises a protector (8) for the transport apparatus (9), it being possible for said protector to be introduced from above, via a movement apparatus, into a transport apparatus (9) located in the loading region.

4. Loading apparatus according to one of Claims 1 to 3, **characterized in that** the loading apparatus (1) comprises at least one light barrier in the entry region of the vertical product shaft.

5. Loading apparatus according to one of Claims 1 to 4, **characterized in that** the loading apparatus (1) comprises a control unit, which controls at least the movement of the first vertical-transport apparatus (4) and of the second vertical-transport apparatus (6).

6. Loading apparatus according to one of Claims 1 to 5, **characterized in that** the second vertical-transport apparatus (6) is equipped with a weighing apparatus, which determines the overall weight of all the products (3) located on the second vertical-transport apparatus (6) .

7. Method for loading a transport apparatus by means of a loading apparatus according to one of Claims 1 to 6, wherein the method comprises the following steps:
- feeding a multiplicity of products (3) by means of a feeding apparatus (2),
- picking up products (3) on a first vertical-transport apparatus (4),
**characterized**
**in that** the method comprises the following steps:
- transferring the products (3) from the first vertical-transport apparatus (4) to a second vertical-transport apparatus (6) by movement of the first vertical-transport apparatus (4) in the downward direction until a fork (5) of the first vertical-transport apparatus (4) crosses over a fork (7) of the second vertical-transport apparatus (6),
- picking up further products (3) on the second vertical-transport apparatus (6),
- transferring the products (3) to the transport apparatus and supplying the first vertical-transport apparatus (4) for the further pick up of products (3).

8. Method according to Claim 7, **characterized in that** the transport apparatus (9) is a rollbox trolley.

9. Method according to Claim 7 or 8, **characterized in that** the step of picking up products on the first vertical-transport apparatus comprises the following steps:
- receiving a signal that a product plane has been fully loaded,
- moving the first vertical-transport apparatus (4) vertically to pick up a further product plane, and
- monitoring the loading of a further product plane, and **in that** the step of picking up further products on the second vertical-transport apparatus (6) comprises the following steps:
- receiving a signal that a product plane has been fully loaded,
- moving the second vertical-transport apparatus (6) vertically to pick up a further product plane, and
- monitoring the loading of a further product plane.

10. Method according to one of Claims 7 to 9, **characterized in that** the step of transferring the products from the first vertical-transport apparatus to the second vertical-transport apparatus comprises the following further steps:
- swinging the fork (5) of the first vertical-transport apparatus (4), and
- moving the second vertical-transport apparatus (6) downwards and moving the first vertical-transport apparatus (4) upwards.

11. Method according to one of Claims 8 to 10, **characterized in that** the method comprises the following steps:
- introducing a rollbox-trolley protector (8) into the rollbox trolley (9).

12. Method according to Claim 11, **characterized in that** the method comprises the following steps:
- extracting the rollbox-trolley protector (8),
- removing the filled transporting apparatus (9) from the vertical product shaft via a removal apparatus, and
- supplying a new transport apparatus (9) in the vertical product shaft.

## Revendications

1. Dispositif de chargement pour un dispositif de transport (9), comprenant :
un dispositif d'amenée (2) destiné à la fourniture de produits (3) préparés,
une cage de produits verticale sur la zone d'entrée de laquelle, à l'extrémité supérieure de la cage de produits, le dispositif d'amenée fournit les produits,
un premier dispositif de transport vertical (4) qui comprend une fourche (5) déplaçable dans la direction verticale, et qui est constitué pour la réception de plusieurs produits (3) et pour le mouvement vertical de plusieurs produits (3) dans la cage de produits verticale, et
un deuxième dispositif de transport vertical (6) destiné au mouvement vertical de plusieurs produits (3) dans la cage de produits verticale,
**caractérisé en ce que**
le deuxième dispositif de transport vertical (6) comprend une fourche (7) déplaçable dans la direction verticale qui, dans une zone de transfert, s'enclenche dans la fourche (5) du premier dispositif de transport vertical (4), et le deuxième dispositif de transport vertical (6) et le premier dispositif de transport vertical (4) étant disposés de telle sorte que des produits (3) dans la zone de transfert dans la cage de produits verticale peuvent être transférés de la fourche (5) du premier dispositif de transport vertical (4) vers la fourche (7) du deuxième dispositif de transport vertical (6), et **en ce que** le deuxième dispositif de transport vertical (6) continue au moins partiellement le chemin de transport du premier dispositif de transport vertical (4), et
la fourche (5) du premier dispositif de transport vertical (4) étant rabattable vers le bas ou étant rabattable vers le bas et pouvant être écartée vers le côté et **en ce que** la fourche (7) du deuxième dispositif de transport vertical (6) peut être écartée vers le côté,
et **en ce que** le premier dispositif de transport vertical (4) est disposé sur un premier côté de la cage de produits verticale, et le deuxième dispositif de transport vertical (6) est disposé sur le côté opposé de la cage de produits verticale,
et **en ce que** le premier dispositif de transport vertical (4) est déplaçable dans la zone centrale et supérieure de la cage de produits, et le deuxième dispositif de transport vertical (6) est déplaçable dans la zone centrale et inférieure de la cage de produits, et **en ce que**,
dans une zone de chargement à l'extrémité inférieure de la cage de produits, le dispositif de transport (9) à charger peut être introduit dans le dispositif de chargement.

2. Dispositif de chargement selon la revendication 1, **caractérisé en ce que** le dispositif de chargement (1) est constitué pour le chargement d'une caisse-palette à roulettes (9) composée d'une zone de fond rectangulaire sur laquelle sont fixées trois ou quatre roulettes, et d'au moins deux éléments latéraux.

3. Dispositif de chargement selon l'une des revendications 1 et 2, **caractérisé en ce que** le dispositif de chargement (1) comprend une protection (8) pour le dispositif de transport (9) qui peut être introduite par le biais d'un dispositif de mouvement par le haut dans un dispositif de transport (9) qui est situé dans la zone de chargement.

4. Dispositif de chargement selon l'une des revendications 1 à 3, **caractérisé en ce que** le dispositif de chargement (1) comprend au moins une barrière photoélectrique dans la zone d'entrée de la cage de produits verticale.

5. Dispositif de chargement selon l'une des revendications 1 à 4, **caractérisé en ce que** le dispositif de chargement (1) comprend une unité de commande qui commande au moins le mouvement du premier dispositif de transport vertical (4) et du deuxième dispositif de transport vertical (6).

6. Dispositif de chargement selon l'une des revendications 1 à 5, **caractérisé en ce que** le deuxième dispositif de transport vertical (6) est équipé d'un dispositif de pesage qui définit le poids total de tous les produits (3) situés sur le deuxième dispositif de transport vertical (6).

7. Procédé de chargement d'un dispositif de transport au moyen d'un dispositif de chargement selon l'une des revendications 1 à 6, le procédé comprenant les étapes suivantes :
- amenée d'une multiplicité de produits (3) au moyen d'un dispositif d'amenée (2),
- réception de produits (3) sur un premier dispositif de transport vertical (4),
**caractérisé en ce que**
le procédé comprend les étapes suivantes :
- transfert des produits (3) à partir du premier dispositif de transport vertical (4) vers un deuxième dispositif de transport vertical (6) par le mouvement du premier dispositif de transport vertical (4) vers le bas jusqu'à ce qu'une fourche (5) du premier dispositif de transport vertical (4) croise une fourche (7) du deuxième dispositif de transport vertical (6),
- réception d'autres produits (3) sur le deuxième dispositif de transport vertical (6),
- transfert des produits (3) dans le dispositif de transport, et fourniture du premier dispositif de transport vertical (4) pour la suite de la réception de produits (3).

8. Procédé selon la revendication 7, **caractérisé en ce que** le dispositif de transport (9) est une caisse-palette à roulettes.

9. Procédé selon la revendication 7 ou 8, **caractérisé en ce que** l'étape de réception de produits sur le premier dispositif de transport vertical comprend les étapes suivantes :
- réception d'un signal indiquant qu'un niveau de produits est entièrement chargé,
- mouvement vertical du premier dispositif de transport vertical (4) destiné à la réception d'un autre niveau de produits, et
- surveillance du chargement d'un autre niveau de produits,
et **en ce que** l'étape de réception d'autres produits sur le deuxième dispositif de transport vertical (6) comprend les étapes suivantes :
- réception d'un signal indiquant qu'un niveau de produits est entièrement chargé,
- mouvement vertical du deuxième dispositif de transport vertical (6) destiné à la réception d'un autre niveau de produits, et
- surveillance du chargement d'un autre niveau de produits.

10. Procédé selon l'une des revendications 7 à 9, **caractérisé en ce que** l'étape de transfert des produits à partir du premier dispositif de transport vertical vers le deuxième dispositif de transport vertical comprend les autres étapes suivantes :
- rabattement de la fourche (5) du premier dispositif de transport vertical (4), et
- mouvement du deuxième dispositif de transport vertical (6) vers le bas et mouvement du premier dispositif de transport vertical (4) vers le haut.

11. Procédé selon l'une des revendications 8 à 10, **caractérisé en ce que** le procédé comprend les étapes suivantes :
- introduction d'une protection de caisse-palette à roulettes (8) dans la caisse-palette à roulettes (9).

12. Procédé selon la revendication 11, **caractérisé en ce que**
le procédé comprend les étapes suivantes :
- enlèvement de la protection de caisse-palette à roulettes (8),
- évacuation, par le biais d'un dispositif d'évacuation, à partir de la cage de produits verticale, du dispositif de transport (9) rempli,
et
- fourniture d'un nouveau dispositif de transport (9) dans la cage de produits verticale.
